# EUROPEAN PATENT SPECIFICATION

(11) **EP 1 732 346 B1**
(45) Date of publication and mention of the grant of the patent: **01.04.2009**
(21) Application number: 06011488.1
(22) Date of filing: 02.06.2006
(51) Int. Cl.: H04W 8/26

(54) **Apparatus and method for sharing a unique identifier among a plurality of receivers**
Vorrichtung und Verfahren zum Teilen eines einmaligen Identifikators durch eine Vielzahl von Empfängern
Appareil et procédé pour partager un identificateur unique entre plusieurs récepteurs

(30) Priority: 08.06.2005 US 688578 P; 22.11.2005 US 285229
(43) Date of publication of application: 13.12.2006
(73) Proprietor: MOTOROLA, INC., Schaumburg, IL 60196 (US)
(72) Inventor: McBeath, Sean M., Keller, Texas 76248 (US); O' Connor, James M., Dallas, Texas 75225 (US); Pinckley, Danny T., Arlington, Texas 76016 (US); Reed, John D., Arlington, Texas 76102 (US); Smith, Jack A., Valley View, Texas 76272 (US); Schumacher, Joseph R, Glen Ellyn, Illinois 60137 (US)
(74) Representative: Openshaw, Paul Malcolm

(56) References cited:
- EP-A- 0 534 612
- US-A- 4 754 453
- US-A1- 2002 001 294
- US-B1- 6 504 835

## Description

### BACKGROUND

### 1. Field

The present invention relates generally to communication systems and, in particular, to a method and apparatus for sharing a unique identifier among a plurality of receivers in a communications system.

### 2. Description of Related Art

Presently, a base station in a wireless network can transmit to and receive information from an access terminal (AT) on a single carrier. For example, a carrier can be a channel occupying a fixed bandwidth on a wireless local area network, a wireless wide area network, such as a code division multiple access (CDMA) network or a time division multiple access (TDMA) network, or any other wireless network. Unfortunately, the use of a single carrier can be limiting. For example, a single carrier can limit the rate at which data can be transmitted, can limit the available bandwidth, or can cause other limitations.

It may be possible to increase the number of transmission carriers to a plurality of carriers. Thus, more carriers can be used if more resources arc required for transmission to and from an access terminal. In such a system, a unique identifier is assigned to each access terminal on each assigned carrier. The access terminal then monitors at least one channel on each assigned carrier for its unique identifier corresponding to that carrier in order to receive data or control information. Examples of such channels can include a forward traffic channel (F-TCH); a forward packet data channel (F-PDCH), a high speed downlink shared channel (HS-DSCH), a preamble of F-TCH, a forward packet data control channel (F-PDCCH), a high speed downlink shared control channel (HS-DSCCH), and the like. There are a limited number of unique identifiers available on each carrier, which limits the total number of access terminals that can be served. Even in a single carrier system, there may be more access terminals requesting service than there are unique identifiers available.

US 6,504,835 discloses a method and system for configuring a radio interface between a mobile station and a base station of a time-division multiplex mobile radio telephone system for a packet data transmission, wherein the mobile stations are additionally identified with identifiers and time slots for signaling for the upstream direction which are allocated to the mobile stations. The allocation of one or more time slots for signaling for the upstream direction occurs according to a prescribable sequence, wherein the allocation occurs with indicator messages that contain abbreviated identifiers and time slot designations.

US 2002/001294 A1 discloses a method for allocating a set of time slots belonging to a common time division multiple access (TDMA) channel to a network of transceiver nodes.

Thus, there is a need for a method and apparatus for providing service to a population of access terminals whose number exceeds the number of existing unique identifiers.

### SUMMARY OF THE INVENTION

In a first aspect, the present invention provides a method for establishing a unique identifier and corresponding time slots for a wireless receiver, as claimed in claim 1.

In a further aspect, the present invention provides a method of employing a unique identifier and corresponding time slots at a receiver, as claimed in claim 5.

In a further aspect, the present invention provides a network controller, as claimed in claim 9.

In a further aspect, the present invention provides a wireless terminal, as claimed in claim 10.

### BRIEF DESCRIPTION OF THE DRAWINGS

FIG. 1 is an exemplary block diagram of a system in accordance with multiple embodiments of the present invention.
FIG. 2 is an exemplary block diagram of a wireless communication device in accordance with multiple embodiments of the present invention.
FIG. 3 is an exemplary diagram of a timing structure in accordance with multiple embodiments of the present invention.
FIG. 4 is an exemplary flowchart illustrating the operation of a system in accordance with multiple embodiments of the present invention.

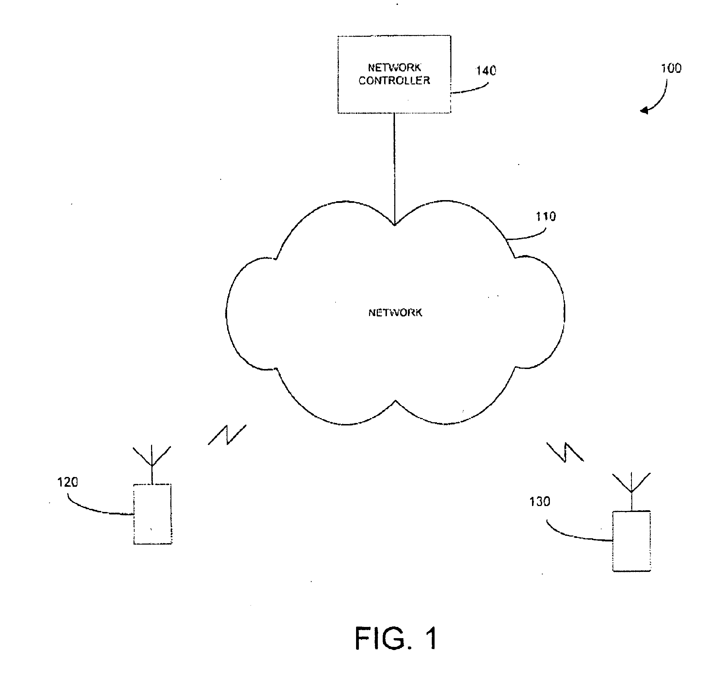

Specific embodiments of the present invention are disclosed below with reference to FIGs. 1-4. Both the description and the illustrations have been drafted with the intent to enhance understanding. For example, the dimensions of some of the figure elements may be exaggerated relative to other elements, and well-known elements that are beneficial or even necessary to a commercially successful implementation may not be depicted so that a less obstructed and a more clear presentation of embodiments may be achieved. Simplicity and clarity in both illustration and description are sought to effectively enable a person of skill in the art to make, use, and best practice the present invention in view of what is already known in the art. One of skill in the art will appreciate that various modifications and changes may be made to the specific embodiments described below without departing from the scope of the present invention. Thus, the specification and drawings are to be regarded as illustrative and exemplary rather than restrictive or all-encompassing, and all such modifications to the specific embodiments described below are intended to be included within the scope of the present invention.

### DETAILED DESCRIPTION

FIG. 1 is an exemplary block diagram of a system 100 in accordance with multiple embodiments of the present invention. The system 100 can include a network controller 140, a network 110, and one or more terminals 120 and 130. Terminals 120 and 130 may be wireless communication devices such as wireless receivers, wireless telephones, cellular telephones, personal digital assistants, pagers, personal computers, mobile communication devices, or any other device that is capable of sending and receiving communication signals on a wireless network.

In an exemplary embodiment, the network controller 140 is connected to the network 110 and comprises a processing unit (not shown) and network interface (not shown) for communicating with network 110, for example. The controller 140 may be located at a base station, at a radio network controller, or anywhere else on the network 110. The network 110 may include any type of network that is capable of sending and receiving wireless signals. For example, the network 110 may include a wireless telecommunications network, a cellular telephone network, a satellite communications network, and other like communications systems. Furthermore, the network 110 may include more than one network and may include a plurality of different types of networks. Thus, the network 110 may include a plurality of data networks, a plurality of telecommunications networks, a combination of data and telecommunications networks and other like communication systems capable of sending and receiving communication signals.

In operation, the network controller 140 can establish at least one unique identifier and at least one corresponding time slot for which the unique identifier is valid for each assigned carrier for a wireless receiver 120 by determining at least one unique identifier and at least one corresponding time slot for which the unique identifier is valid for each assigned carrier for a wireless receiver 120 and sending an indication of the unique identifiers, time slots, and carriers to the wireless receiver 120. The network controller 140 can be located at a base station and can send the indication using a layer three signaling message, such as the TrafficChannelAssignment message in 1xEV-DO. The identification of the assigned carriers may be permanently stored at the wireless receiver, sent using a layer three message, determined using a rule based on a primary carrier, or assigned in any other way. There can be one or more assigned carriers, and a carrier can be a channel occupying a fixed bandwidth.

The time slots for each receiver may be chosen such that there are approximately the same number of wireless receivers assigned to each time slot, such that the assigned time slots are the same on each assigned carrier for a wireless receiver to allow, for example, the receiver to enter a power savings mode with reduced functionality between time slots. Additionally, the assigned time slots may be different on each assigned carrier, may be based on a predetermined or random assignment, or using any other technique. The number of assigned time slots for each receiver can be chosen according to the processing capabilities of the wireless receivers, according to the delay constraints of the application for the wireless receiver, according to the quality of service constraints for the wireless receiver, according to the number of available time slots, or using any other technique. For example, if a wireless receiver is in a voice over internet protocol (VoIP) session, then the number of assigned time slots can be increased, which minimizes the delay, which is important for VoIP. A time slot may be assigned on one or more carriers, and a transmission on that time slot may be scheduled by the network controller according to the quality of the signal received by the wireless receiver.

The time slot indication can be an individual time slot, a group of time slots, a time slot number with a known period, a group of time slots with a known period, or any other indication.

For example, each terminal 120 and 130 can be assigned at least one unique identifier and at least one corresponding time slot for which the unique identifier is valid for each assigned carrier. The assigned time slots, unique identifiers, and carriers can be signaled to the terminals 120 and 130 using a layer three signaling message, such as the TrafficChannelAssignment message, in advance of sending or receiving the F-TCH and corresponding control channel. The control channel corresponding to F-TCH can be any channel used to carry information about the F-TCH. The control channel may be on a different Walsh code, in a different time slot, sent as a preamble to the F-TCH, or the like. For example, in 3GPP2 1xEV-DV, the F-TCH and control channel correspond to the F-PDCH and F-PDCCH, respectively. In 3GPP2 1xEV-DO, the F-TCH and control channel correspond to the F-TCH and to the preamble of the F-TCH, respectively. In 3GPP, the F-TCH and control channel correspond to the HS-DSCH and HS-DSCCH, respectively. Other systems can have similar corresponding channels to send similar signals. With assigned time slots, unique identifiers, and carriers, a terminal 120 can know which time slots and carriers to monitor for its unique identifier. Since a terminal may not be assigned the entire set of time slots for each unique identifier for each assigned carrier, the controller 140 can assign multiple terminals to the same unique identifier on each carrier, as long as the assigned time slots are different.

By adding at least one time slot to the unique identifier assignment on each assigned carrier, more than one terminal can share the same unique identifier. This allows more terminals to be assigned to each carrier than would be allowed if the unique identifier was valid over all time slots.

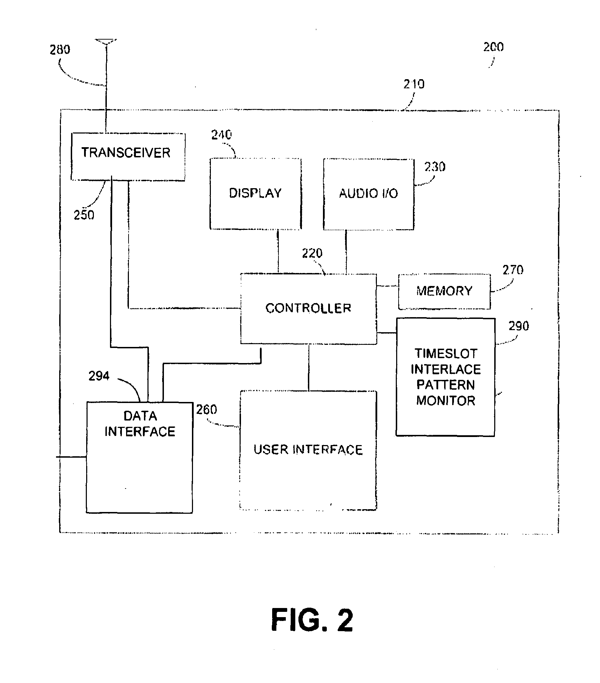

FIG. 2 is an exemplary block diagram of a wireless communication device 200, such as the terminal 120 or the terminal 130, in accordance with multiple embodiments of the present invention. The wireless communication device 200 can include a housing 210, a controller 220 coupled to the housing 210, audio input and output circuitry 230 coupled to the housing 210, a display 240 coupled to the housing 210, a transceiver 250 coupled to the housing 210, a user interface 260 coupled to the housing 210, a memory 270 coupled to the housing 210, and an antenna 280 coupled to the housing 210 and the transceiver 250. The wireless communication device 200 can also include a time-slot monitor 290. The time-slot monitor 290 can be coupled to the controller 220, can reside within the controller 220, can reside within the memory 270, can be an autonomous module, can be software, can be hardware, or can be in any other format useful for a module on a wireless communication device 200. Some of the processing components of device 200 can be generally referred to as a processing unit (not shown). Depending on the embodiment, such a processing unit may include some or all of controller 220, memory 270, and/or time-slot monitor 290, for example. The wireless communication device 200 can also include a data interface device 294 for receiving and sending data from and to external data communications devices, for example, computers.

The display 240 can be a liquid crystal display (LCD), a light emitting diode (LED) display, a plasma display, or any other means for displaying information. The transceiver 250 may include a transmitter and/or a receiver. The audio input and output circuitry 230 can include a microphone, a speaker, a transducer, or any other audio input and output circuitry. The user interface 260 can include a keypad, buttons, a touch pad, a joystick, an additional display, or any other device useful for providing an interface between a user and an electronic device. The memory 270 may include a random access memory, a read only memory, an optical memory, a subscriber identity module memory, or any other memory that can be coupled to a wireless communication device.

In operation, the controller 220 can control the operations of the wireless communication device. The transceiver 250 can include a receiver configured to receive an indication of at least one assigned unique identifier and at least one corresponding time slot for each assigned carrier from a transmitter. For example the indication can be received in a layer 3 signaling message, such as the TrafficChannelAssignment message. The time slot monitor 290 can monitor only those time slots on each assigned carrier for the unique identifier which corresponds to the time slot and carrier.

For example, the time slot monitor 290 can monitor those time slots on each assigned carrier for the corresponding unique identifier. The unique identifier can be a mobile communication device or access terminal identification number, a subscriber identity, or any other identifier that can be used to uniquely identify a terminal on a channel or carrier. For example, the unique identifier can be a medium access control index (MAC Index), and there may be different unique identifiers for the terminal on each assigned carrier and in each time slot. The controller 220 can then decode or otherwise process packets or other forms of data or control information in the time slots where the assigned unique identifier is found for each assigned carrier. For example, a terminal 120 can monitor the preamble of the forward traffic channel (F-TCH) in the assigned time slots on each assigned carrier to determine if a transmission on a forward traffic channel (F-TCH) is intended for the terminal 120. When a unique identifier of the F-TCH preamble matches the terminal's unique identifier, the terminal 120 knows it should decode the F-TCH. In alternative embodiments, the wireless receiver may receive the packet with the assigned unique identifier irrespective of the time slot, and then discard any packet that was not received in the assigned time slot, although this method is less efficient than limiting the reception to the assigned time slots.

In some embodiments, the controller 220 can also decode control channels, broadcast channels, multi-user packets, or the like in the assigned time slots on each assigned carrier. The controller can further process such channels when it finds its unique identifier, possibly embedded as part of a control channel, broadcast channel, multi-user packet, or the like. In other embodiments, the controller 220 can decode or otherwise process control channels, broadcast channels, multi-user packets, or the like in every time slot on each assigned carrier. For example, in some cases, control channels are not dedicated to one user, so the controller may decode control channels in every time slot.

In related embodiments, the network controller may assign two unique identifiers to the wireless receiver on at least one carrier. One unique identifier is considered primary and may be assigned at least one corresponding time slot. The other unique identifier is considered backup and may be assigned in at least one time slot. For example, the backup unique identifier may be valid only within multi-user packets, which are only used if necessary. Further, the backup unique identifier may only be used when the primary unique identifier is not available.

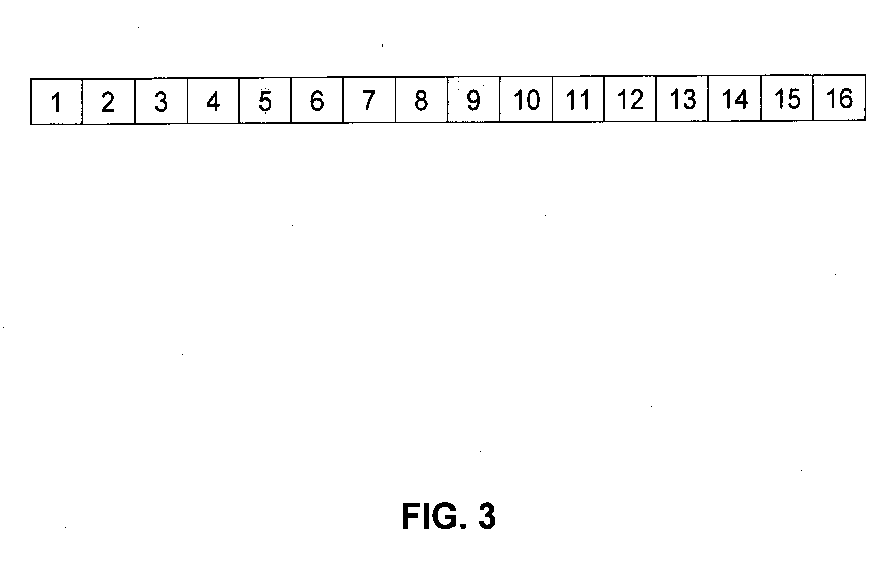

FIG. 3 is an exemplary diagram 300 of a timing structure in accordance with multiple embodiments of the present invention. Here, a group of sixteen consecutive time slots is broken up into four interlace patterns. Interlace pattern one is time slots 1, 5, 9, and 13, which are shaded. Interlace pattern two is time slots 2, 6, 10, and 14. Interlace pattern three is time slots 3, 7, 11, and 15. Interlace pattern four is time slots 4, 8, 12, and 16. The network controller 140 can assign a wireless receiver 120 at least one unique identifier and at least one corresponding interlace on each assigned carrier. For example, if a wireless receiver 120 is assigned a unique identifier on interlace pattern one on a particular carrier, then it monitors time slots 1, 5, 9, and 13 for its unique identifier on that carrier. It may ignore all interlace patterns on each assigned carrier, where it has not been assigned a unique identifier. One technique for indicating the interlace pattern assignment to the wireless receiver 120 is to include an additional two bit field in a layer three signaling message, such as the TrafficChannelAssignment message. The bits 00 would indicate the first interlace pattern, 01 the second interlace pattern, 10 the third interlace pattern, and 11 the fourth interlace pattern. Any other mapping of bits to interlace patterns can also be used. If more than one unique identifier is assigned to a wireless receiver 120 on a particular carrier, then the unique identifier and corresponding interlace pattern could be included in the layer three signaling message. In other embodiments, the unique identifier can be the same for several assigned interlace patterns. Here, a four bit field can be used to indicate the interlaces for which the unique identifier is valid. A one in the Nth bit in this four bit field indicates that the unique identifier is valid in the Nth interlace pattern, while a zero indicates that the unique identifier is not valid in that interlace. For example, the pattern 0110 would indicate that the unique identifier is valid in the second and third interlace patterns. More generally, there would be a one bit field for each possible time slot or group of time slots, where a one can indicate that the unique identifier is valid in that time slot or group of time slots and a zero indicates that the unique identifier is not valid in that time slot or group of time slots.

Typically, the unique identifier used on the forward link for reverse link power control and hybrid automatic repeat request (HARQ) and the unique identifier for forward link traffic transmission are the same. If the same unique identifier is assigned to more than one wireless receiver 120 for forward link traffic transmission (in different time slots), then there is some potential ambiguity concerning the unique identifier for reverse link power control and HARQ. To compensate, each wireless receiver 120 is assigned at least one unique identifier, at least one corresponding time slot, and at least one corresponding carrier for reverse link power control and HARQ. Note that each of these power control and HARQ assignments can be different from those assigned for forward traffic transmissions. For example, suppose a wireless receiver is assigned unique identifier 13 and interlace pattern 1 on carrier 3 and unique identifier 15 and interlace pattern 2 on carrier 9 for forward traffic transmission. The same wireless receiver can be assigned unique identifier 19 and all interlace patterns on carrier 3 for its reverse link power control and reverse link HARQ information. To reduce the amount of data transferred between processors, e.g. connected across the back-plane of the equipment hardware, the forward link carrier used for reverse link power control and HARQ can be a frequency division duplex (FDD) pair of the carrier the wireless receiver 120 uses to transmit. It is also envisioned that the network controller may assign the reverse link offset, which is a relative time defining the transmission time of a group of reverse link slots and an associated time for the reverse link power control information to be sent on the forward link. This assignment is made, such that the reverse link power control commands arrive in an interlace which has been assigned for forward traffic transmission, and is therefore received by the wireless receiver.

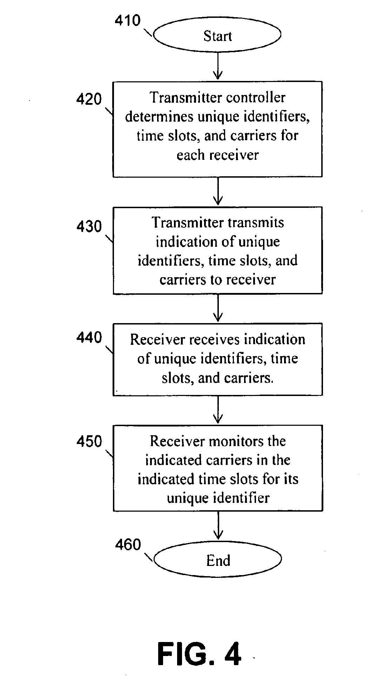

FIG. 4 is an exemplary flowchart 400 illustrating the operation of a system in accordance with multiple embodiments of the present invention. In step 410, the flowchart begins. In step 420, a transmitter controller determines the unique identifier(s) and corresponding time slot(s) and carrier(s) for a receiver. In step 430, the transmitter transmits an indication of said unique identifier(s), time slot(s), and carrier(s) to the receiver. In step 440, the receiver receives the indication of the said unique identifier(s), time slot(s), and carrier(s) from the transmitter. In step 450, the receiver monitors only those time slots for its unique identifier on each assigned carrier. In step 460, the flowchart 400 ends.

The method of this disclosure is preferably implemented on a programmed processor. However, the controllers, flowcharts, and modules may also be implemented on a general purpose or special purpose computer, a programmed microprocessor or microcontroller and peripheral integrated circuit elements, an ASIC or other integrated circuit, a hardware electronic or logic circuit such as a discrete element circuit, a programmable logic device such as a PLD, PLA, FPGA or PAL, or the like. In general, any device on which resides a finite state machine capable of implementing the embodiments described above and/or the claims below may be used to implement the processor functions of this disclosure.

Benefits, other advantages, and solutions to problems have been described above with regard to specific embodiments of the present invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims. As used herein and in the appended claims, the term "comprises," "comprising," or any other variation thereof is intended to refer to a non-exclusive inclusion, such that a process, method, article of manufacture, or apparatus that comprises a list of elements does not include only those elements in the list, but may include other elements not expressly listed or inherent to such process, method, article of manufacture, or apparatus.

The terms a or an, as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly, and not necessarily mechanically. The terms program, computer program, and computer instructions, as used herein, are defined as a sequence of instructions designed for execution on a computer system. This sequence of instructions may include, but is not limited to, a subroutine, a function, a procedure, an object method, an object implementation, an executable application, an applet, a servlet, a shared library/dynamic load library, a source code, an object code and/or an assembly code.

## Claims

1. A method for establishing a unique identifier and corresponding time slots for a wireless receiver (120) **characterized by** comprising:
determining at least one unique identifier and at least one corresponding time slot, for which the at least one unique identifier is valid, from a plurality of available unique identifier, time slot combinations for the wireless receiver (120); and
sending an indication of the at least one unique identifier and the at least one corresponding time slot to the wireless receiver (120).

2. The method according to claim 1, comprising:
determining at least one backup unique identifier and at least one corresponding time slot from the plurality of available unique identifier, time slot combinations for the wireless receiver (120); and
sending an indication of the at least one backup unique identifier and the at least one backup time slot to the wireless receiver (120).

3. The method according to claim 1, further comprising:
determining at least one carrier which corresponds to the at least one unique identifier and at least one corresponding time slot; and
sending an indication of the at least one carrier to the wireless receiver (120).

4. The method according to claim 3, wherein the at least one carrier comprises a channel occupying a fixed bandwidth.

5. A method of employing a unique identifier and corresponding time slots at a receiver (120), **characterized by** comprising:
receiving an indication of at least one unique identifier and at least one corresponding time slot for which the at least one unique identifier is valid; and
monitoring at least one channel using the at least one unique identifier during the at least one corresponding time slot indicated.

6. The method according to claim 5, further comprising:
receiving an indication of at least one carrier corresponding to the at least one unique identifier and the at least one corresponding time slot,
wherein monitoring the at least one channel using the at least one unique identifier during the at least one corresponding time slot indicated comprises monitoring the at least one channel on the at least one carrier.

7. The method according to claim 6, wherein monitoring the at least one channel using the at least one unique identifier during the at least one corresponding time slot indicated further comprises processing packets that contain the at least one unique identifier for that carrier and time slot combination.

8. The method according to claim 5, further comprising:
entering a reduced power mode during at least one time slot other than those of the at least one corresponding time slot indicated.

9. A network controller (140) **characterized by** comprising:
a network interface;
a processing unit, communicatively coupled to the network interface,
adapted to determine at least one unique identifier and at least one corresponding time slot, for which the at least one unique identifier is valid, from a plurality of available unique identifier, time slot combinations for a wireless receiver, and
adapted to send, via the network interface, an indication of the at least one unique identifier and the at least one corresponding time slot to the wireless receiver.

10. A wireless terminal (120), **characterized by** comprising:
a transceiver;
a processing unit, communicatively coupled to the transceiver,
adapted to receive, via the transceiver, an indication of at least one unique identifier and at least one corresponding time slot for which the at least one unique identifier is valid, and
adapted to monitor, using the transceiver, at least one channel using the at least one unique identifier during the at least one corresponding time slot indicated.

## Patentansprüche

1. Ein Verfahren zur Erstellung einer eindeutigen Kennung und entsprechender Zeitfenster für einen drahtlosen Empfänger (120), **dadurch gekennzeichnet, dass** es folgendes umfasst:
Bestimmen mindestens einer eindeutigen Kennung und mindestens eines entsprechenden Zeitfensters, für das die mindestens eine eindeutige Kennung gültig ist, aus einer Vielzahl von verfügbaren Kombinationen von eindeutige Kennung, Zeitfenster für den drahtlosen Empfänger (120); und
Senden einer Anzeige der mindestens einen eindeutigen Kennung und des mindestens einen entsprechenden Zeitfensters an den drahtlosen Empfänger (120).

2. Das Verfahren nach Anspruch 1, das folgendes umfasst:
Bestimmen mindestens einer eindeutigen Sicherungskennung und mindestens eines entsprechenden Zeitfensters aus der Vielzahl von verfügbaren Kombinationen von eindeutige Kennung, Zeitfenster für den drahtlosen Empfänger (120); und
Senden einer Anzeige der mindestens einen eindeutigen Sicherungskennung und des mindestens einen entsprechenden Sicherungszeitfensters an den drahtlosen Empfänger (120).

3. Das Verfahren nach Anspruch 1, das ferner folgendes umfasst:
Bestimmen mindestens eines Trägers, welcher der mindestens einen eindeutigen Kennung und dem mindestens einen entsprechenden Zeitfenster entspricht; und
Senden einer Anzeige des mindestens einen Trägers an den drahtlosen Empfänger (120).

4. Das Verfahren nach Anspruch 3, wobei der mindestens eine Träger einen Kanal, der eine festgelegte Bandbreite belegt, umfasst.

5. Ein Verfahren zur Verwendung einer eindeutigen Kennung und entsprechender Zeitfenster an einem Empfänger (120), **dadurch gekennzeichnet, dass** es folgendes umfasst:
Empfangen einer Anzeige von mindestens einer eindeutigen Kennung und mindestens eines entsprechenden Zeitfensters, für das die mindestens eine eindeutige Kennung gültig ist; und
Beobachten mindestens eines Kanals unter Verwendung der mindestens einen eindeutigen Kennung während des mindestens einen entsprechenden Zeitfensters, das angezeigt ist.

6. Das Verfahren nach Anspruch 5, das ferner folgendes umfasst:
Empfangen einer Anzeige von mindestens einem Träger, welcher der mindestens einen eindeutigen Kennung und dem mindestens einen entsprechenden Zeitfenster entspricht,
wobei das Beobachten des mindestens einen Kanals unter Verwendung der mindestens einen eindeutigen Kennung während des mindestens einen entsprechenden Zeitfensters, das angezeigt ist, das Beobachten des mindestens einen Kanals auf dem mindestens einen Träger umfasst.

7. Das Verfahren nach Anspruch 6, wobei das Beobachten des mindestens einen Kanals unter Verwendung der mindestens einen eindeutigen Kennung während des mindestens einen entsprechenden Zeitfensters, das angezeigt ist, ferner das Verarbeiten von Paketen, welche die mindestens eine eindeutige Kennung für die Kombination aus Träger und Zeitfenster enthalten, umfasst.

8. Das Verfahren nach Anspruch 5, das ferner folgendes umfasst:
Aktivieren eines leistungsreduzierten Betriebs während mindestens eines Zeitfensters, welches sich von denjenigen des mindestens einen entsprechenden Zeitfensters, das angezeigt ist, unterscheidet.

9. Eine Netzwerksteuerung (140), **dadurch gekennzeichnet, dass** es folgendes umfasst:
eine Netzwerkschnittstelle;
eine Verarbeitungseinheit, die mit der Netzwerkschnittstelle kommunikativ gekoppelt ist,
die zum Bestimmen mindestens einer eindeutigen Kennung und mindestens eines entsprechenden Zeitfensters, für das die mindestens eine eindeutige Kennung gültig ist, aus einer Vielzahl von verfügbaren Kombinationen von eindeutige Kennung, Zeitfenster für einen drahtlosen Empfänger ausgestaltet ist, und
die zum Senden, über die Netzwerkschnittstelle, einer Anzeige der mindestens einen eindeutigen Kennung und des mindestens einen entsprechenden Zeitfensters an den drahtlosen Empfänger ausgestaltet ist.

10. Ein drahtloses Endgerät (120), **dadurch gekennzeichnet, dass** es folgendes umfasst:
einen Sendeempfänger;
eine Verarbeitungseinheit, die mit dem Sendeempfänger kommunikativ gekoppelt ist,
die zum Empfangen, über den Sendeempfänger, einer Anzeige von mindestens einer eindeutigen Kennung und mindestens eines entsprechenden Zeitfensters, für das die mindestens eine eindeutige Kennung gültig ist, ausgestaltet ist, und
die zum Beobachten, unter Verwendung des Sendeempfängers, mindestens eines Kanals unter Verwendung der mindestens einen eindeutigen Kennung während des mindestens einen entsprechenden Zeitfensters, das angezeigt ist, ausgestaltet ist.

## Revendications

1. Procédé pour établir un identifiant unique et des intervalles de temps correspondants pour un récepteur sans fil (120), **caractérisé par le fait qu'**il comprend les opérations consistant à :
- déterminer au moins un identifiant unique et au moins un intervalle de temps correspondant, pendant lequel l'au moins un identifiant unique est valide, à partir d'une pluralité de combinaisons disponibles identifiant unique, intervalle de temps pour le récepteur sans fil (120) ; et
- envoyer une indication de l'au moins un identifiant unique et de l'au moins un intervalle de temps correspondant au récepteur sans fil (120).

2. Procédé selon la revendication 1, comprenant les opérations consistant à :
- déterminer au moins un identifiant unique de secours et au moins un intervalle de temps correspondant à partir de la pluralité de combinaisons disponibles identifiant unique, intervalle de temps pour le récepteur sans fil (120) ; et
- envoyer une indication de l'au moins un identifiant de secours et de l'au moins un intervalle de temps de secours au récepteur sans fil (120).

3. Procédé selon la revendication 1, comprenant en outre les opérations consistant à :
- déterminer au moins une porteuse qui correspond à l'au moins un identifiant unique et à l'au moins un intervalle de temps correspondant ; et
- envoyer une indication de l'au moins une porteuse au récepteur sans fil (120).

4. Procédé selon la revendication 3, dans lequel l'au moins une porteuse comprend un canal occupant une bande passante fixe.

5. Procédé d'emploi d'un identifiant unique et d'intervalles de temps correspondants au niveau d'un récepteur (120), **caractérisé par le fait qu'**il comprend les opérations consistant à :
- recevoir une indication d'au moins un identifiant unique et d'au moins un intervalle de temps correspondant pendant lequel l'au moins un identifiant unique est valide ; et
- contrôler au moins un canal à l'aide de l'au moins un identifiant unique pendant l'au moins un intervalle de temps correspondant indiqué.

6. Procédé selon la revendication 5, comprenant en outre les opérations consistant à :
- recevoir une indication d'au moins une porteuse correspondant à l'au moins un identifiant unique et à l'au moins un intervalle de temps correspondant,
dans lequel le contrôle de l'au moins un canal à l'aide de l'au moins un identifiant unique pendant l'au moins un intervalle de temps correspondant indiqué comprend le contrôle de l'au moins un canal sur l'au moins une porteuse.

7. Procédé selon la revendication 6, dans lequel le contrôle de l'au moins un canal à l'aide de l'au moins un identifiant unique pendant l'au moins un intervalle de temps correspondant indiqué comprend en outre le traitement de paquets qui contiennent l'au moins un identifiant unique pour cette combinaison porteuse et intervalle de temps.

8. Procédé selon la revendication 5, comprenant en outre les opérations consistant à :
- entrer dans un mode de puissance réduite pendant au moins un intervalle de temps autre que ceux de l'au moins un intervalle de temps correspondant indiqué.

9. Contrôleur de réseau (140), **caractérisé par le fait qu'**il comprend :
- une interface réseau ;
- une unité de traitement, couplée en communication avec l'interface réseau,
- apte à déterminer au moins un identifiant unique et au moins un intervalle de temps correspondant, pendant lequel l'au moins un identifiant unique est valide, à partir d'une pluralité de combinaisons disponibles identifiant unique, intervalle de temps pour un récepteur sans fil ; et
- apte à envoyer, par l'intermédiaire de l'interface réseau, une indication de l'au moins un identifiant unique et de l'au moins un intervalle de temps correspondant au récepteur sans fil.

10. Terminal sans fil (120), **caractérisé par le fait qu'**il comprend :
- un émetteur-récepteur ;
- une unité de traitement, couplée en communication avec l'émetteur-récepteur,
- apte à recevoir, par l'intermédiaire de l'émetteur-récepteur, une indication d'au moins un identifiant unique et d'au moins un intervalle de temps correspondant pendant lequel l'au moins un identifiant unique est valide ; et
- apte à contrôler, à l'aide de l'émetteur-récepteur, au moins un canal à l'aide de l'au moins un identifiant unique pendant l'au moins un intervalle de temps correspondant indiqué.
